# EUROPEAN PATENT APPLICATION

(11) **EP 4 379 507 A1**
(43) Date of publication of application: **05.06.2024**
(21) Application number: 22210811.0
(22) Date of filing: 01.12.2022
(51) Int. Cl.: G06F 3/01, G06F 3/04815, G06F 3/16, H04W 4/02, G06T 19/00, H04L 67/131, H04W 4/021

(54) **PROVIDING NOTIFICATION IN A VIRTUAL ENVIRONMENT**

(71) Applicant: Nokia Technologies Oy, 02610 Espoo (FI)
(72) Inventor: LEPPÄNEN, Jussi Artturi, Tampere (FI); LEHTINIEMI, Arto Juhani, Lempäälä (FI); VILERMO, Miikka Tapani, Siuro (FI)
(74) Representative: Nokia EPO representatives

(57) **Abstract**

A method comprising determining that a user has moved, within a virtual reality scene, from a first location to a second location, identifying a first route between the first location and the second location that corresponds to the route selected by the user, determining a second route, different than the first route, between the first location and the second location, determining that the second route goes through a first trigger area with which a first notification is associated and wherein the first notification is to be rendered in response to the user having a location within the first trigger area, determining that the first route bypassed the first trigger area, and identifying the first notification as a missed notification.

## Description

### FIELD

The present application relates to virtual media content and providing a notification associated with the virtual media content.

### BACKGROUND

A virtual environment may be provided using virtual media content. The virtual environment may be a virtual reality environment that a user may experience as a fully immersive virtual reality environment. For rendering such virtual reality environment, a head-mounted device may be used. The device may render visual media content comprised in the virtual reality environment and optionally, it may also render audio media content comprised in the virtual reality environment or the audio media content may be rendered by another device. The virtual reality environment may comprise audio that is so called six degrees of freedom (6DoF) which allows a fully immersive user experience and a user experience that allows a user to freely explore a sound environment comprised in the virtual environment.

### BRIEF DESCRIPTION

The scope of protection sought for various embodiments is set out by the independent claims. The exemplary embodiments and features, if any, described in this specification that do not fall under the scope of the independent claims are to be interpreted as examples useful for understanding various embodiments of the invention.

According to an aspect there is provided an apparatus comprising means for: determining that a user has moved, within a virtual reality scene, from a first location to a second location, identifying a first route between the first location and the second location that corresponds to a route selected by the user, determining a second route, different than the first route, between the first location and the second location, determining that the second route goes through a first trigger area with which a first notification is associated and wherein the first notification is to be rendered in response to the user having a location within the first trigger area, determining that the first route bypassed the first trigger area, and identifying the first notification as a missed notification.

According to another aspect there is provided an apparatus comprising at least one processor, and at least one memory storing instructions that, when executed by the at least one processor, to cause the apparatus at least to perform: determine that a user has moved, within a virtual reality scene, from a first location to a second location, identify a first route between the first location and the second location that corresponds to a route selected by the user, determine a second route, different than the first route, between the first location and the second location, determine that the second route goes through a first trigger area with which a first notification is associated and wherein the first notification is to be rendered in response to the user having a location within the first trigger area, determine that the first route bypassed the first trigger area, and identify the first notification as a missed notification.

According to another aspect there is provided a method comprising determining that a user has moved, within a virtual reality scene, from a first location to a second location, identifying a first route between the first location and the second location that corresponds to a route selected by the user, determining a second route, different than the first route, between the first location and the second location, determining that the second route goes through a first trigger area with which a first notification is associated and wherein the first notification is to be rendered in response to the user having a location within the first trigger area, determining that the first route bypassed the first trigger area, and identifying the first notification as a missed notification.

According to another aspect there is provided a computer program comprising instructions for causing an apparatus to perform at least the following: determine that a user has moved, within a virtual reality scene, from a first location to a second location, identify a first route between the first location and the second location that corresponds to a route selected by the user, determine a second route, different than the first route, between the first location and the second location, determine that the second route goes through a first trigger area with which a first notification is associated and wherein the first notification is to be rendered in response to the user having a location within the first trigger area, determine that the first route bypassed the first trigger area, and identify the first notification as a missed notification.

According to another aspect there is provided a computer program product comprising instructions for causing an apparatus to perform at least the following: determine that a user has moved, within a virtual reality scene, from a first location to a second location, identify a first route between the first location and the second location that corresponds to a route selected by the user, determine a second route, different than the first route, between the first location and the second location, determine that the second route goes through a first trigger area with which a first notification is associated and wherein the first notification is to be rendered in response to the user having a location within the first trigger area, determine that the first route bypassed the first trigger area, and identify the first notification as a missed notification.

According to another aspect there is provided a computer program comprising instructions stored thereon for performing at least the following: determining that a user has moved, within a virtual reality scene, from a first location to a second location, identifying a first route between the first location and the second location that corresponds to a route selected by the user, determining a second route, different than the first route, between the first location and the second location, determining that the second route goes through a first trigger area with which a first notification is associated and wherein the first notification is to be rendered in response to the user having a location within the first trigger area, determining that the first route bypassed the first trigger area, and identifying the first notification as a missed notification.

According to another aspect there is provided a non-transitory computer readable medium comprising program instructions for causing an apparatus to perform at least the following: determine that a user has moved, within a virtual reality scene, from a first location to a second location, identify a first route between the first location and the second location that corresponds to a route selected by the user, determine a second route, different than the first route, between the first location and the second location, determine that the second route goes through a first trigger area with which a first notification is associated and wherein the first notification is to be rendered in response to the user having a location within the first trigger area, determine that the first route bypassed the first trigger area, and identify the first notification as a missed notification.

According to another aspect there is provided non-transitory computer readable medium comprising program instructions stored thereon for performing at least the following: determining that a user has moved, within a virtual reality scene, from a first location to a second location, identifying a first route between the first location and the second location that corresponds to a route selected by the user, determining a second route, different than the first route, between the first location and the second location, determining that the second route goes through a first trigger area with which a first notification is associated and wherein the first notification is to be rendered in response to the user having a location within the first trigger area, determining that the first route bypassed the first trigger area, and identifying the first notification as a missed notification.

### BRIEF DESCRIPTION OF THE DRAWINGS

FIG. 1 illustrates an exemplary embodiment of a virtual reality scene comprised in a virtual reality environment that provides a fully immersive user experience.
FIG. 2A and FIG. 2B illustrate an example embodiment of a virtual reality scene with two rooms.
FIG. 3 illustrates an exemplary embodiment in which the notification is rendered after determining that the route selected by the user did not cross the trigger area.
FIG. 4 and FIG. 5 illustrate example embodiments of a virtual reality scene that comprises two trigger areas.
FIG. 6 illustrates an example embodiment of a user selecting a route that misses a trigger area.
FIG. 7 illustrates an example embodiment of a system.
FIG. 8 illustrates a flow chart according to an example embodiment.
FIG. 9 illustrates an exemplary embodiment of an apparatus.

### DETAILED DESCRIPTION

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments.

As used in this application, the term 'circuitry' refers to all of the following: (a) hardware-only circuit implementations, such as implementations in only analog and/or digital circuitry, and (b) combinations of circuits and software (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present. This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device. The above-described embodiments of the circuitry may also be considered as embodiments that provide means for carrying out the embodiments of the methods or processes described in this document.

As used herein, the term "determining" (and grammatical variants thereof) can include, not least: calculating, computing, processing, deriving, measuring, investigating, looking up (e.g., looking up in a table, a database or another data structure), ascertaining and the like. Also, "determining" can include receiving (e.g., receiving information), accessing (e.g., accessing data in a memory), obtaining and the like. Also, "determining" can include resolving, selecting, choosing, establishing, and the like.

A virtual reality environment may comprise a plurality of virtual reality scenes. A scene may be understood as a limited part of the virtual reality environment. For example, if a virtual environment comprises a house with multiple rooms, one room may be understood as one virtual reality scene. It is to be noted that the scenes could alternatively be limited in any other suitable manner as well. For example, in one scene there may be two rooms that are adjacent to each other.

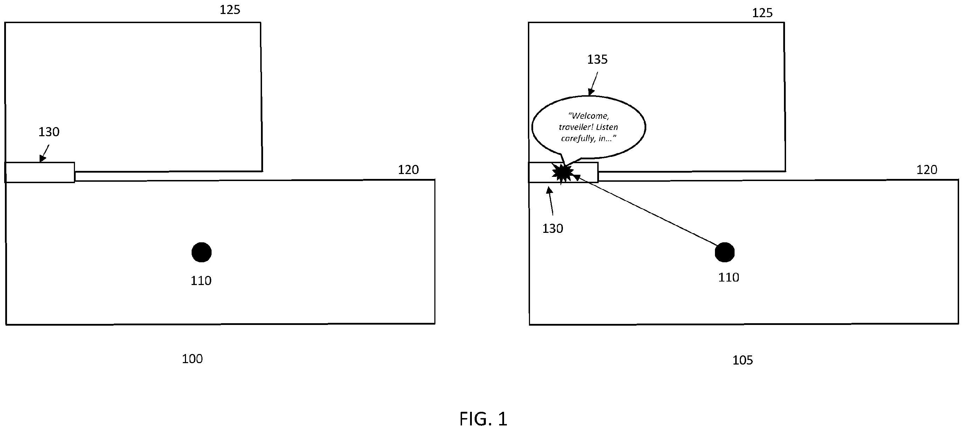

FIG. 1 illustrates an example embodiment of a virtual reality scene comprised in a virtual reality environment that provides a fully immersive user experience. In this example embodiment, the user 110 experiences a virtual reality scene that comprises a first room 120 and a second room 125. The rooms are separated by a wall in the rendered virtual reality scene such that there is one doorway 130 leading from the first room 120, within which the user 110 currently is, as is illustrated as a first situation 100, to the second room 125. The designer of this virtual reality scene has introduced a notification 135 that is to be triggered and rendered to the user 110 as the user passes through the doorway from the first room 120 to the second room 125. The notification 135 in this example embodiment is an audio prompt that provides the user 110 important information regarding the virtual reality scene as the user 110 enters the second room 125 and this is illustrated as a second situation 105. Thus, the notification 135 is a location dependent notification, the location being a location within the virtual reality scene, and may thus be associated with a trigger area such that rendering of the notification 135 is triggered when it is determined that the user 110 has a location within the trigger area.

The virtual reality environment may be implemented using any suitable manner. In some examples, the implementation of the virtual reality environment may follow a standard such as MPEG-I. In some example embodiments, when MPEG-I is followed and audio rendering is implemented accordingly, the notification that is associated with the trigger area may be implemented using an update mechanism and thus providing an update with a definition of a region that is the trigger area and a reference to the notification, for example, to an audio signal in case the notification is an audio prompt. The notification is then triggered as the user is determined to have a location within the trigger area, for example, when the user enters the trigger area. Such update information may then be encoded into an MPEG-I 6DoF audio bitstream along with the rest of the description regarding the virtual reality scene that is to be rendered. During the rendering, the bitstream is then read and decoded and the audio is rendered according to the decoded scene description by the rendering device which may be a head-mounted device. This rendering according to the scene description then comprises the rendering of the notification when the user is in the trigger area.

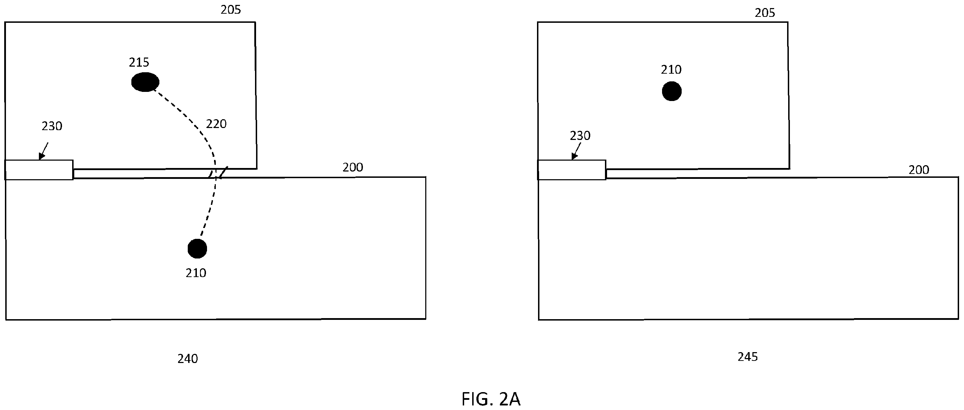

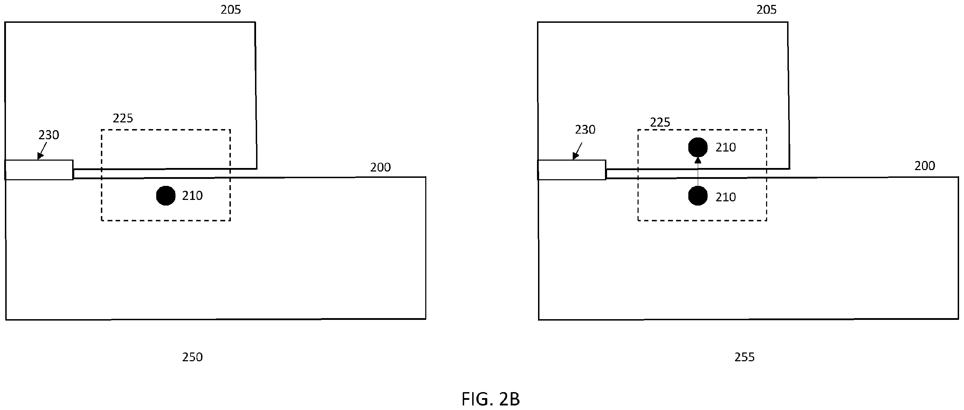

FIG. 2A and FIG. 2B illustrate an example embodiment of a virtual reality scene with two rooms. In this example embodiment there is a notification associated with a trigger area, wherein the trigger area defines an area within the virtual reality scene that causes the notification to be rendered, in other words to be triggered, when the location of the user 210 within the virtual reality scene is within the trigger area. As is illustrated in FIG. 2A, there is the first room 200 and the second room 205. Between the first room 200 and the second room 205 there is a doorway that is defined to be the trigger area 230 for a notification. The notification in this example embodiment is regarding the second room 205. The user 210 is located in the first room 200 in the initial situation 240 that corresponds to the first time instant. The user 210 however has decided to move to the second room 205 and therefore the user 210 may choose between at least two routes that take him from the first location that is within the first room 200, in other words, in the first location within the virtual reality scene, to the second location 215 that is in the second room 205, in other words, to the second location within the virtual reality scene. The first route would be to enter the second room 205 through the doorway and thus through the trigger area 230. In the second route 220 that takes the user 210 directly, through a wall, to the second area, may also be selected if the user 210 decides to use the teleport option enable by the virtual reality environment. In other words, the second route bypasses the trigger area 230. In this example embodiment, the user selects the second route 220 that bypasses the trigger area 230 and thus, in the second situation 245, the user 210 has the second location within the second room 205 without entering the trigger area.

In addition to teleporting, there may also be other situations in which the user 210 may proceed from the first location within the first room 200 to the second location within the second room 205. This is illustrated in FIG. 2B in which there is a play area 225. The play area 225 corresponds to the extent of the real-world room the user has available for moving around in the virtual scene. Thus, the user may select, as a third route from the first location to the second location, a route within the play area 225 thus bypassing the trigger area 230. As is illustrated in FIG. 2B, the user 210 has in this first situation 250 his first location within the first room 200 and within the play area 225. In the second situation 255 the user 210 has taken the third route to the second location within the second room 205 and the second location is also within the play area 225. As such, the user 210 has again moved from the first location to the second location by selecting a route that bypasses the trigger area 230 and as such, the notification regarding the second room was not triggered.

When implementing the virtual reality scene, the content creator may pay special attention to designing of the virtual reality scene such that trigger areas such as trigger area 230, are not missed by a user who is experiencing the virtual reality environment. Yet, it may still happen due to small opening in the scene mesh or glitches during rendering for example that a trigger area is missed by a user, which may lead to a worse user experience than intended as the user misses information provided by the notification such as an audio prompt. Further, the notification may also trigger other types of functionality, such as triggering state changes of objects. Therefore, it is desirable to have a way to provide the notification to the user even if the trigger area was bypassed.

In case a user selects a route in the virtual scene that bypasses a trigger area, thus missing an intended notification, it may be determined that an action for rendering the notification is to be performed. For example, in case it is determined that the user used a teleport functionality to move from a first location within the virtual reality scene to another location within the virtual reality scene, after the teleportation, once the user is in the second location, it is determined if the route taken crossed an intended trigger area for a notification. If it is determined that the route bypassed the trigger area, then the action is performed and the action comprises rendering the notification even though it is not in response to the route crossing the trigger area.

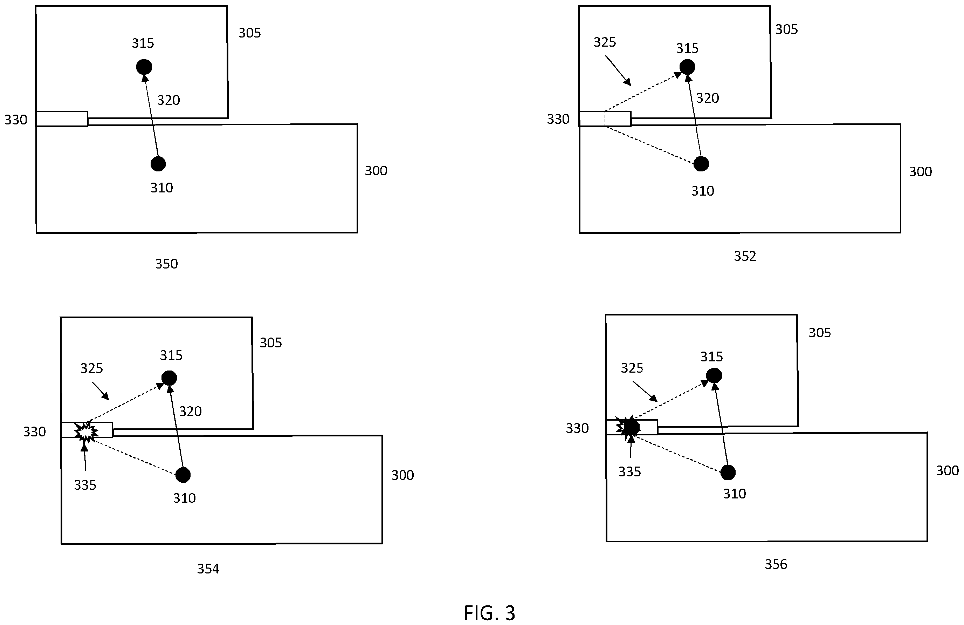

FIG. 3 illustrates an exemplary embodiment in which the notification is rendered after determining that the route selected by the user did not cross the trigger area. In this example embodiment there is a virtual reality scene with two rooms, the first room 300 and the second room 305 and they have a doorway connecting them. The doorway is a location to which a notification is associated and thus the doorway is within an area that is the trigger area 330 for the notification. The user 310 is in the first situation 350 located in the first room 300 and decides to move to a second location 315 that is the second room 305. To do this, the user decides to take the route 320 that bypasses the trigger area 330.

In the second situation 352 it is determined that the user 310 has a new location, the second location 315 located within the second room 305. The expected route 325 between the first location and the second location 315 is illustrated using the dashed arrow and the expected route 325 crosses the trigger area 330. As it is determined that the location of the user 310 has changed, it may be determined if the change in terms of distance between the first location and the second location 315 is greater than a threshold distance and if it is, then it is determined if the user 310 used a specific action to move to the second location 315. The specific action in this example embodiment is teleporting. As it is determined that the change in the location in terms of distance between the first location and the second location 315 is greater than a pre-determined threshold value, in other words, greater than a pre-determined threshold distance, and that the user 310 teleported to the second location 315, it is determined if there was a bypassed trigger area 330. For example, the first room 300 and the second room 305 may be defined in the scene description for the virtual reality scene using enclosing meshes or geometric primitives based on which it may be determined that the user 310 is in a different room and that the trigger area 330 was bypassed. As an alternative example, the scene description may have acoustic environments, such as reverb parameters, defined from different spaces. Whenever, the user moves to another acoustic environment, the check from missed triggers may be performed as the first room 300 and the second room 305 may have different acoustic environments defined for them.

In this example embodiment, as it is determined that the user 310 is in the second location 315 in the second room 305, and that the change is greater than a pre-defined threshold value and the user 310 performed the teleportation, a path finding operation, for identifying the selected route, is performed to determine one or more missed trigger areas. If a missed trigger area is identified, in this example embodiment, the trigger area 330, the associated notification is identified as a missed notification.

As a notification is identified as a missed notification, it is determined that the notification is to be rendered. The rendering may be performed in any suitable manner. Situation 354 illustrates an example regarding how the missed notification may be rendered. In this example, the notification 335 as if the user 310 has taken the expected path through the trigger area 330 thus causing the notification to be rendered. In another example, alternatively, as illustrated in the situation 356, the user is teleported to the trigger area 330 and the notification 335 is thus rendered at the location it is associated with while the user 310 is also located in that location. Thus, an action is performed that moves the location of the user to the location that is associated with the notification 335.

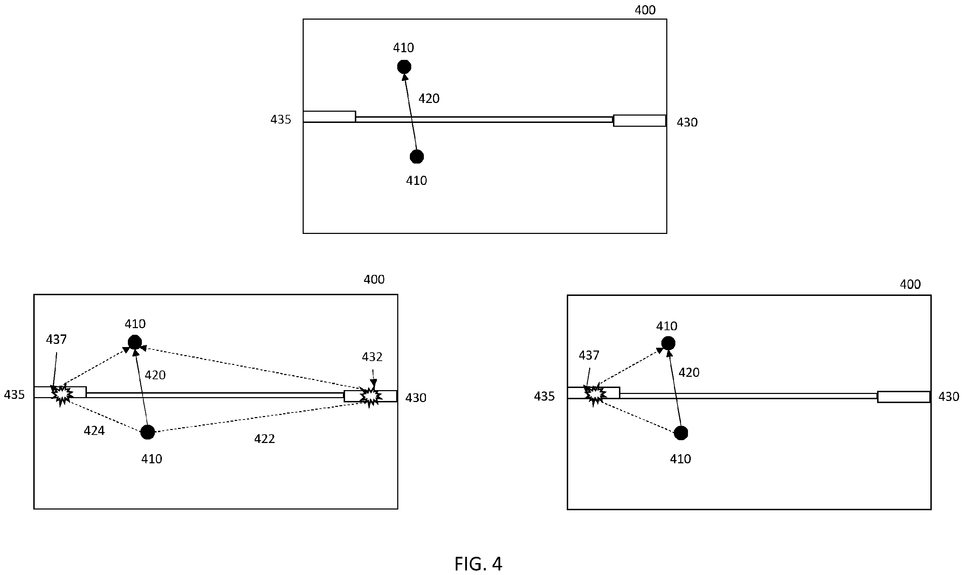

FIG. 4 illustrates another example embodiment. In this example embodiment there is a virtual reality scene 400 that comprises two trigger areas. The first trigger area 430 is associated with a first notification 432 that is associated with a location within the trigger area 430. The second trigger area 435 is associated with a second notification 437 that has its associated location within the second trigger area 435. In this example embodiment the user 410 moves from the first location to the second location using the route 420, which bypasses the first trigger area 430 and the second trigger area 435. Alternative route 422 goes through the first trigger area 430 and the other alternative route 424 goes through the second trigger area 435. Thus, the selected route bypasses the trigger areas 430 and 435. As it is determined that the user 410 has moved to the second location and that the route selected bypasses the trigger area 430 and 435, it is determined that at least one of the missed notifications 432 and 437 is to be rendered to the user 410. For example, it may be determined which of the routes 422 and 424 is shorter and then render the notification that is triggered by the trigger area through which the shorter route goes through. In this example embodiment, the alternative route 424 is shorter and thus the second notification 437 may be rendered. Alternatively, both notifications 432 and 437 may be rendered.

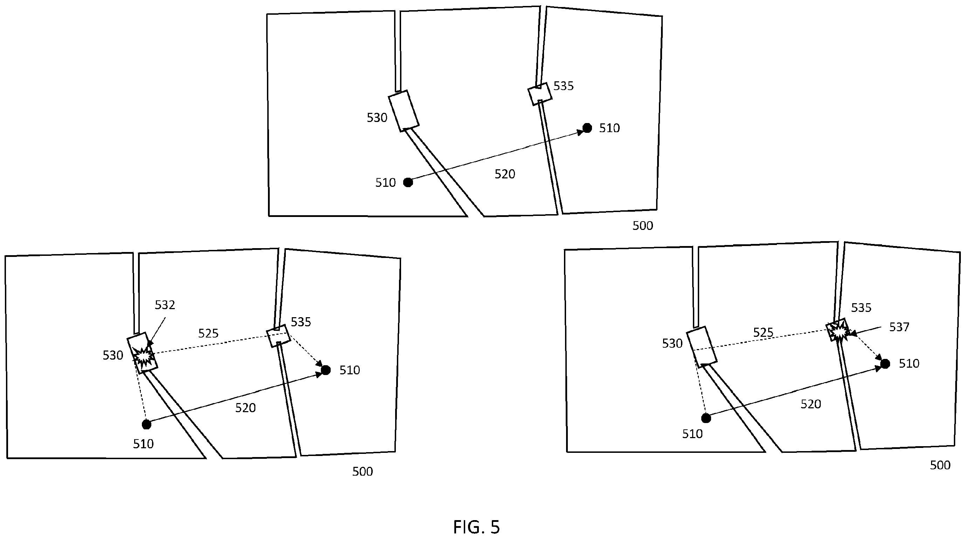

FIG. 5 illustrates another example embodiment, in which the expected route 525, which is not selected by the user 510, comprises more than one trigger areas. In this example embodiment, the user 510 has the first location within the virtual scene 500 that comprises two trigger areas 530 and 535 that are along the expected route 525 between the first and the second location of the user 510. Yet, the user decides to perform an action, that in this example embodiment is teleporting, that causes the user to use the route 520 between the first and the second location. The route 520 bypasses both trigger areas 530 and 535. As it is determined that the trigger areas were bypassed, the missed notifications may be rendered in a sequential manner. For example, the first notification 532 associated with the first trigger area 530 may be rendered first and after that the second notification 537 associated with the trigger area 535 as the expected route 525 passes first through the first trigger area 530. Additionally, the location of the user 510 may also be set first to the first trigger area 530 for the duration of the first notification 532 and/or then to the second trigger area 535 for the duration of the second notification 537 and after that the user location may be set back to the second location.

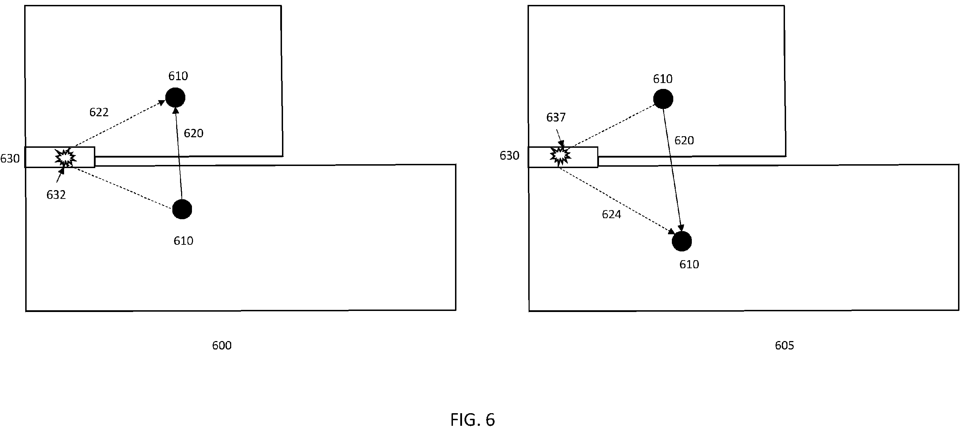

FIG. 6 illustrates a further example embodiment of a user 610 selecting a route 620 that misses a trigger area 630. In this example embodiment, though, the expected direction of arrival to the second location of the user 610 determines which notification is rendered. For example, a different audio prompt is to be triggered depending on from which direction the listener reaches the trigger area. Thus, if the user misses the route 622 as illustrated in situation 600, the notification 632 is rendered. But if the user misses the route 624 as illustrated in situation 605, the notification 637 is rendered.

It is to be noted that in general, a virtual reality scene may comprised a plurality of trigger areas that may each be associated with their respective notifications.

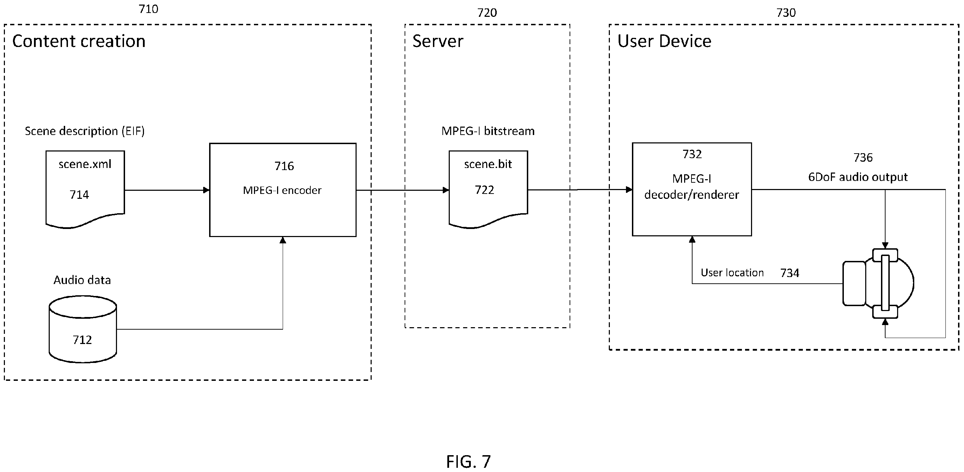

FIG. 7 illustrates an example embodiment of a system that may be used for the example embodiments described above. The system is illustrated as a simplified block diagram to simplify the explanation. The system in this example embodiment may be considered as a MPEG-I rendering pipeline. In the block 710, there is content creation that may be performed by a content creator. For example, the content creator may create content that comprises audio data 712 and for which virtual reality scenes are defined using scene descriptions 714. The scene descriptions 714 may be in accordance with encoder input format (EIF). The scenes 714 and the audio data 712 are then combined using the MPEG-I encoder 716, which creates a bitstream 722 representation of the data. The bitstream is then provided to the server 720 that is used to serve the bitstream 722 to the user device 730 which houses an MPEG-I decoder and renderer 732. It is to be noted that the user device 730 may be any suitable user device, for example, a headset used for rendering virtual reality content. The renderer takes as input the decoded metadata and audio data as well as the user location 734. From these 6DoF audio is output 736. The missed audio trigger detection/rendering processing described above may performed at the renderer 732.

It is to be noted that in some example embodiments, the content creator may wish to control the behaviour of triggering the missed notifications. The creator may wish to control which missed notifications are to be rendered when they are missed by the user as explained above. This information may be inserted into the scene description. As such, some notifications may be such that even if those are missed, they are not rendered in response to determining that they were missed.

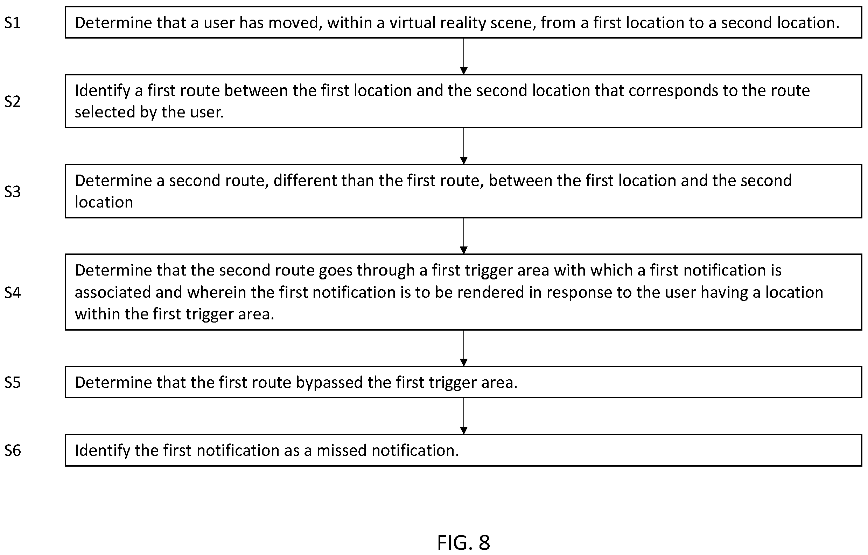

FIG. 8 illustrates a flow chart according to an example embodiment. A method according to the flow chart may be performed for example by an apparatus that is connected to or comprised in a user device such as the user device 730. In the flow chart according to this example embodiment first, in block S1, it is determined that a user has moved, within a virtual reality scene, from a first location to a second location. Then, in block S2, a first route is identified and the first route is between the first location and the second location and corresponds to a route selected by the user. The route selected by the user may be understood as a route along which the user moved from the first location to the second location. Next, in block S3, a second route, different than the first route, between the first location and the second location is determined after which in block S4 it is determined that the second route goes through a first trigger area with which a first notification is associated and wherein the first notification is to be rendered in response to the user having a location within the first trigger area. Then, in block S5 it is determined that the first route bypassed the first trigger area and in block S6 the first notification is identified as a missed notification.

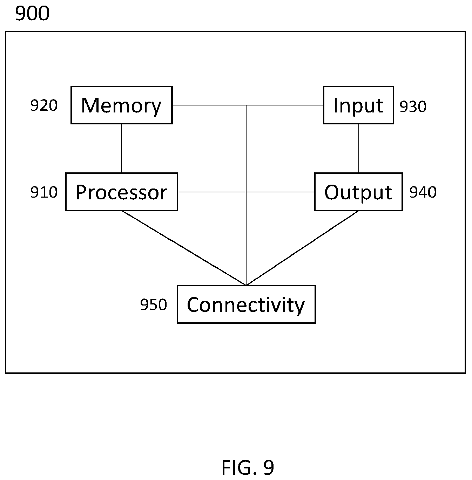

FIG. 9 illustrates an exemplary embodiment of an apparatus 900, which may be or may be comprised in a device such as a mobile device, according to an example embodiment. The apparatus 900 comprises a processor 910. The processor 910 interprets computer program instructions and process data. The processor 910 may comprise one or more programmable processors. The processor 910 may comprise programmable hardware with embedded firmware and may, alternatively or additionally, comprise one or more application specific integrated circuits, ASICs.

The processor 910 is coupled to a memory 920. The processor is configured to read and write data to and from the memory 920. The memory 920 may comprise one or more memory units. The memory units may be volatile or non-volatile. It is to be noted that in some example embodiments there may be one or more units of non-volatile memory and one or more units of volatile memory or, alternatively, one or more units of non-volatile memory, or, alternatively, one or more units of volatile memory. Volatile memory may be for example RAM, DRAM or SDRAM. Non-volatile memory may be for example ROM, PROM, EEPROM, flash memory, optical storage or magnetic storage. In general, memories may be referred to as non-transitory computer readable media. The memory 920 stores computer readable instructions that are execute by the processor 910. For example, non-volatile memory stores the computer readable instructions and the processor 910 executes the instructions using volatile memory for temporary storage of data and/or instructions.

The computer readable instructions may have been pre-stored to the memory 920 or, alternatively or additionally, they may be received, by the apparatus, via electromagnetic carrier signal and/or may be copied from a physical entity such as computer program product. Execution of the computer readable instructions causes the apparatus 900 to perform functionality described above.

In the context of this document, a "memory" or "computer-readable media" may be any non-transitory media or means that can contain, store, communicate, propagate or transport the instructions for use by or in connection with an instruction execution system, apparatus, or device, such as a computer.

The apparatus 900 further comprises, or is connected to, an input unit 930. The input unit 930 comprises one or more interfaces for receiving a user input. The one or more interfaces may comprise for example one or more motion and/or orientation sensors, one or more cameras, one or more accelerometers, one or more microphones, one or more buttons and one or more touch detection units. Further, the input unit 930 may comprise an interface to which external devices may connect to.

The apparatus 900 also comprises an output unit 940. The output unit comprises or is connected to one or more displays capable of rendering visual content such as a light emitting diode, LED, display, a liquid crystal display, LCD and a liquid crystal on silicon, LCoS, display. The output unit 940 further comprises one or more audio outputs. The one or more audio outputs may be for example loudspeakers or a set of headphones.

The apparatus 900 may further comprise a connectivity unit 950. The connectivity unit 950 enables wired and/or wireless connectivity to external networks. The connectivity unit 950 may comprise one or more antennas and one or more receivers that may be integrated to the apparatus 900 or the apparatus 900 may be connected to. The connectivity unit 950 may comprise an integrated circuit or a set of integrated circuits that provide the wireless communication capability for the apparatus 900. Alternatively, the wireless connectivity may be a hardwired application specific integrated circuit, ASIC.

It is to be noted that the apparatus 900 may further comprise various component not illustrated in the Figure 9. The various components may be hardware component and/or software components.

Example embodiments described herein may be implemented using software, hardware, application logic or a combination of them. Also, if desired, different functionalities discussed herein may be performed in a different order, some functionalities may be performed concurrently, and, if desired, some of the above-mentioned functionalities may be combined. Although various aspects of the invention are set out in the independent claims, other aspects of the invention comprise other combinations of features from the described embodiments and/or dependent claims with features of the independent claims and not solely the combinations explicitly set out in the claims.

It will be appreciated that the above described example embodiments are purely illustrative and are not limiting on the scope of the invention. Other variations and modifications will be apparent to persons skilled in the art upon reading the present specification.

## Claims

**1.** An apparatus comprising means for:
determining that a user has moved, within a virtual reality scene, from a first location to a second location;
identifying a first route between the first location and the second location that corresponds to a route selected by the user;
determining a second route, different than the first route, between the first location and the second location;
determining that the second route goes through a first trigger area with which a first notification is associated and wherein the first notification is to be rendered in response to the user having a location within the first trigger area;
determining that the first route bypassed the first trigger area; and
identifying the first notification as a missed notification.

**2.** An apparatus according to claim 1, wherein the apparatus further comprises means for rendering the first notification in response to identifying it as the missed notification.

**3.** An apparatus according to claim 2, wherein the apparatus further comprises means for changing the location of the user to a location associated with the first notification, wherein the location associated with the first notification is within the first trigger area.

**4.** An apparatus according to any previous claim, wherein the apparatus further comprises means for identifying the first route in response to determining that a distance between the first location and the second location within the virtual reality scene is greater than a threshold distance.

**5.** An apparatus according to any previous claim, wherein the apparatus further comprises means for
determining a third route between the first location and the second location, wherein the third route goes through a second trigger area with which a second notification is associated and wherein the second notification is to be rendered in response to the user having a location within the second trigger area;
determining that the first route bypassed the second trigger area; and
identifying the second notification as a missed notification.

**6.** An apparatus according to claim 5, wherein the apparatus further comprises means for rendering the second notification in response to identifying it as the missed notification.

**7.** An apparatus according to any previous claim, wherein the second route comprises a third trigger area with which a third notification is associated and wherein the third notification is to be rendered in response the user having a location within the third trigger area.

**8.** An apparatus according to claim 7, wherein the apparatus further comprises means for rendering the third notification after rendering the first notification.

**9.** An apparatus according to claim 8, wherein the apparatus further comprises means for changing the location of the user to a location associated with the third notification, wherein the location associated with the third notification is within the third trigger area.

**10.** An apparatus according to any previous claim, wherein the apparatus further comprises means for associating a location of a fourth notification with the first trigger area and determining, based on the direction of the second route which one of the first notification and the fourth notification is to be rendered.

**11.** A method comprising:
determining that a user has moved, within a virtual reality scene, from a first location to a second location;
identifying a first route between the first location and the second location that corresponds to a route selected by the user;
determining a second route, different than the first route, between the first location and the second location;
determining that the second route goes through a first trigger area with which a first notification is associated and wherein the first notification is to be rendered in response to the user having a location within the first trigger area;
determining that the first route bypassed the first trigger area; and
identifying the first notification as a missed notification.

**11.** A method according to claim 10, wherein the method further comprises rendering the first notification in response to identifying it as the missed notification.

**12.** A method according to claim 11, wherein the method further comprises changing the location of the user to a location associated with the first notification, wherein the location associated with the first notification is within the first trigger area.

**13.** A method according to any of claims 10 to 12, wherein the method further comprises:
determining a third route between the first location and the second location, wherein the third route goes through a second trigger area with which a second notification is associated and wherein the second notification is to be rendered in response to the user having a location within the second trigger area;
determining that the first route bypassed the second trigger area; and
identifying the second notification as a missed notification.

**14.** A method according to claim 13, wherein the method further comprises rendering the second notification in response to identifying it as the missed notification.

**15.** A computer program comprising instructions which, when executed by an apparatus, cause the apparatus to perform at least the following:
determine that a user has moved, within a virtual reality scene, from a first location to a second location;
identify a first route between the first location and the second location that corresponds to a route selected by the user;
determine a second route, different than the first route, between the first location and the second location;
determine that the second route goes through a first trigger area with which a first notification is associated and wherein the first notification is to be rendered in response to the user having a location within the first trigger area;
determine that the first route bypassed the first trigger area; and
identify the first notification as a missed notification.
